# EUROPEAN PATENT APPLICATION

(11) **EP 4 485 772 A1**
(43) Date of publication of application: **01.01.2025**
(21) Application number: 23382673.4
(22) Date of filing: 30.06.2023
(51) Int. Cl.: H02K 29/12

(54) **POSITION SENSOR FOR A PERMANENT MAGNET BRUSHLESS MOTOR AND PERMANENT MAGNET BRUSHLESS MOTOR**

(71) Applicant: Airbus Defence and Space, S.A.U., 28906 Getafe - Madrid (ES)
(72) Inventor: JIMÉNEZ OLAZÁBAL, Andrés, 28224 Getafe (ES)
(74) Representative: Elzaburu S.L.P.

(57) **Abstract**

Position sensor for a permanent magnet brushless motor, the motor comprising a rotor (100) with permanent magnets (101) surrounding a stator (200) with stator salient poles (202) and with a motor winding (201) wound around the stator salient poles (202), wherein the position sensor comprises: a salient pole sensor stator portion (400) configured to be placed adjacent to a salient pole motor stator portion (205) of the motor, and; a sensor winding (401) wound in a distributed manner around sensor salient poles (402) of the salient pole sensor stator portion (400); wherein the position sensor is configured to measure the position of the rotor (100) in relation to the stator (200) by measuring currents induced in the sensor winding (401) caused by the rotation of the rotor (100).

## Description

### Technical field

The present invention is directed to a position sensor for a permanent magnet brushless motor. The present invention is further directed to a permanent magnet brushless motor incorporating the position sensor.

Thanks to the position sensor of the present invention, the position of the rotor in relation to the stator of the motor can be accurately measured, without the need of incorporating any mechanical part (such as conventional resolvers or encoders) between the rotor and the stator.

This invention is applicable in the field of electric engineering and, more precisely, in the field of design, manufacturing and control of electric motors.

### Background of the invention

Brushless electric motors having a salient pole stator and a permanent magnet rotor are known. Furthermore, within this kind of electric motors, there is a specific kind of motors where the salient pole stator is placed attached to the motor axis, while the permanent magnet rotor surrounds the central stator. These motors are commonly known as "outrunners". Document US 4719378 A discloses an electric motor of this kind.

In electric motors of the type mentioned above, there is a need to know the precise mechanical position of the rotor in relation to the stator. The methods commonly used for rotor position measurement are typically based on sensors coupled to rotor position as resolvers or encoders. This kind of sensors are external devices coupled between the stator and rotor in order to measure by means different technologies the relative mechanical position between rotor and stator.

When using resolvers or encoders for measuring the relative position of the rotor in relation to the stator, a calibration procedure is required in order to synchronize the delta position between the magnetic position and mechanical position of rotor.

These sensors can detect continuously the rotor position with a high resolution, more than 12-14 bits that is 4096 different positions.

A simple solution based on magnetic hall sensors could be used in order to measure directly the position of rotor magnets through the measurement of magnetic flux of magnets.

A drawback of this kind of sensor is that each of these sensors can detect a variation of magnetic flux in only one mechanical point of the rotor position. Thus, the minimum number of hall sensor used is 3 sensors placed at 60 electrical degrees in order to be able to perform the trapezoidal commutation of stator windings. Of course, an extrapolation of this technology could be used in order to measure the complete rotor position but the number of sensors is increased accordingly.

### Summary of the invention

With the aim of providing a solution to the abovementioned problems, the present invention refers to a position sensor for a permanent magnet brushless motor and to a permanent magnet brushless motor.

The position sensor of the present invention is especially designed for use in a permanent magnet brushless motor, the motor comprising a rotor with permanent magnets surrounding a stator with stator salient poles and with a motor winding (stator winding) wound around the stator salient poles.

The position sensor of the present invention comprises:
- a salient pole sensor stator portion configured to be placed adjacent to a salient pole motor stator portion of the motor, and;
- a sensor winding wound in a distributed manner around sensor salient poles of the salient pole sensor stator portion.

The position sensor is configured to measure the position of the rotor in relation to the stator by measuring currents induced in the sensor winding caused by the rotation of the rotor.

Thanks to the position sensor described above, there is no need to attach any mechanical part (static and rotating modules) to the rotor and to the stator, in order to be able of determining the position of the rotor in relation to the stator (as it would be the case with conventional encoders or resolvers).

This solution reduces the weight and complexity of the complete set formed by the motor and the sensor, by eliminating the rotating part of the sensor and by reusing the magnets of own principal rotor (i.e. taking advantage of the permanent magnets of the motor rotor, as if it was the "rotating module" of the sensor).

This sensor allows to measure continuously the magnetic position of rotor by using the own magnetic field generated by the movement of the permanent magnets of the rotor.

The position sensor of the invention is used as a "small generator" where back electromagnetic forces are induced by faraday law thanks to the magnetic flux rotation of rotor. This induction is used for continuously measuring the magnetic rotor position.

Thus, the position sensor of the present invention allows for continuously measuring the magnetic position of rotor avoiding the position synchronization between magnetic and mechanical rotor position.

The salient pole sensor stator portion may be formed of a plurality of stacked sensor lamination plates. Thus, the position sensor of the present invention takes advantage of the same stator lamination stack design of principal motor as the stator design of sensor.

Thus, with the position sensor design, according to the present invention, there is no need to include any other mechanical parts in the rotor for measuring its position while, in the stator side, one single part shall be included: a series of stacked slices or lamination plates, adjacent to (or in series with) the salient pole motor stator portion.

If the salient pole motor stator portion is formed of a series of stacked slices or stator lamination plates, the position sensor of the present invention may be designed such that the sensor lamination plates comprise the same geometry as the stator lamination plates.

The salient pole sensor stator portion of the sensor is preferably shorter (it covers less distance along the motor axis) than the salient pole motor stator portion of the motor.

According to a preferred embodiment of the position sensor of the present invention, the sensor winding is a two-phase sensor winding. This allows for reducing the number of wires required for measuring. This configuration further allows to reproduce the resolver output where two signals (sine a cosine signals) are generated with a phase lag of 90 electrical degrees between them. This allows to use the reading mathematical process of conventional resolvers and a Sin-Cos phase-observer to obtain the magnetic position measurement from these two generated signals. Frequency and voltage of these two signals depend proportionally to speed of principal motor.

However, as an optional alternative design, same three-phase motor winding could be also used to build the sensor although the voltage feedback will be based in three voltages that shall be used to compose the position measurement.

In case the sensor winding be a two-phase sensor winding, each sensor phase may be distributed in two sensor peripheral portions, separated 180º from each other. Furthermore, each sensor peripheral portion may comprise three adjacent sensor salient poles.

According to a possible embodiment of the position sensor, the salient pole sensor stator portion may be separated from the salient pole motor stator portion by means of a washer. This washer provides a physical barrier for reducing the PWM frequency component influence of the motor winding on the sensor winding.

The position sensor may comprise a band-rejection filter connected to the sensor winding. This band rejection filter may be set at any frequency whose influence on the sensor winding is to be reduced and/or cancelled. For instance, the band-rejection filter may be set at motor commutation PWM frequency.

As already introduced, the present invention is further directed to a permanent magnet brushless motor comprising a rotor with permanent magnets surrounding a stator with stator salient poles and with a motor winding wound around the stator salient poles, wherein the motor comprises a position sensor as described above.

### Brief description of the drawings

As a means for better understanding at least one embodiment of the present invention, the following set of drawings is introduced by way of schematic illustration and in a non-limitative manner.
Figure 1: Shows a schematic longitudinal cross section view of a conventional permanent magnet brushless motor, where the rotor surrounds the salient pole stator, and where the stator winding is schematically shown.
Figure 2: Shows a schematic plan view of one lamination plate of the stator lamination stack.
Figure 3: Shows a schematic transversal cross section view of the brushless motor of Figure 1.
Figure 4: Shows a schematic longitudinal cross section view of the brushless motor of Figure 1, where an external sensor is attached for measuring the position of the rotor in relation to the stator.
Figure 5: Shows a schematic transversal cross section view of the brushless motor of Figure 1, corresponding to a part of the stator where a possible embodiment of the position sensor of the present invention is incorporated.
Figure 6: Shows a schematic longitudinal cross section view of the brushless motor of Figure 1, where a possible embodiment of the position sensor of the present invention is incorporated.

### Detailed description

The present invention, as already introduced, refers to a position sensor for a permanent magnet brushless motor and to a permanent magnet brushless motor.

As already introduced, conventional permanent magnet brushless "outrunners" (outrunner motors) comprise an external rotor (100) with permanent magnets (101) surrounding an internal salient pole stator (200) with a three-phase motor winding (201), wherein each of the three motor phases (201a, 201b, 201c) is wound around a number of stator salient poles (202), and distributed in at least two separate stator peripheral portions (203), each stator peripheral portion (203) of the stator (200) comprising one or more adjacent stator salient poles (202).

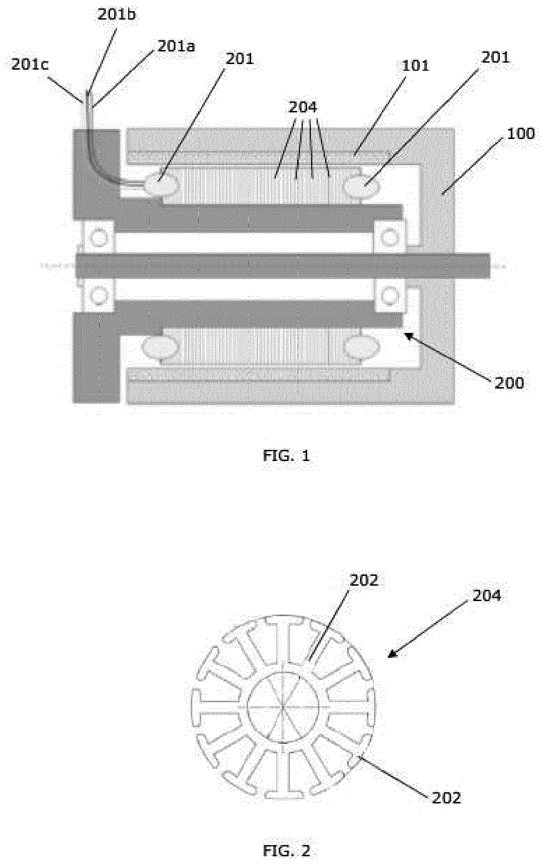

Figure 1 schematically depicts a permanent magnet brushless "outrunner" motor, where the stator (200) is formed of a stack of stator lamination plates (204).

Figure 2 depicts one of these stator lamination plates (204) (or slices), where the form of the different stator salient poles (202) is appreciated.

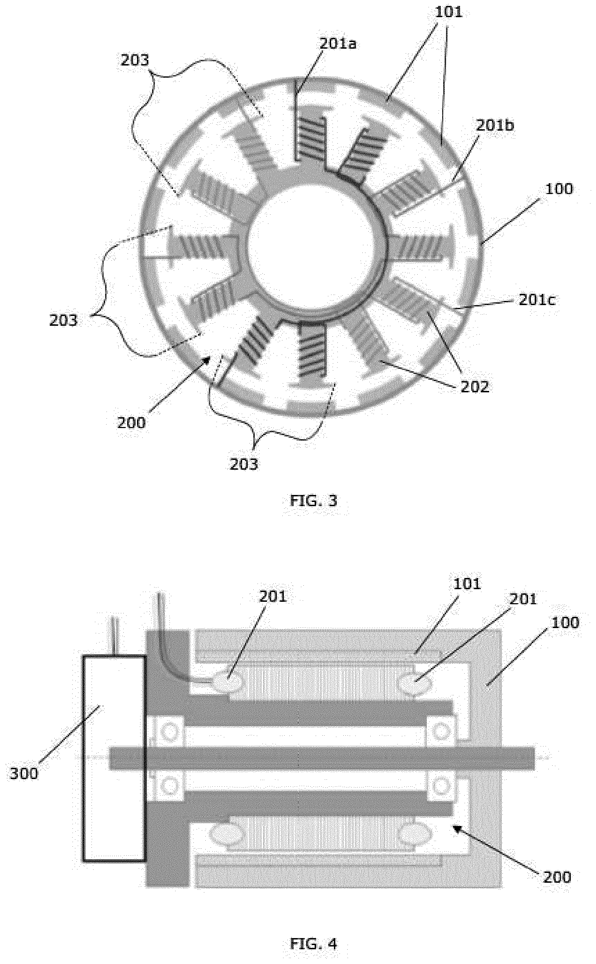

Figure 3 schematically depicts the three-phase motor winding (201) of the stator (200). As can be seen, each motor phase (201a, 201b, 201c) is distributed in two stator peripheral portions (203), separated 180º from each other, wherein each stator peripheral portion (203) comprises two adjacent stator salient poles (202) where the motor winding (201) is wound forming a north pole adjacent to a south pole of the corresponding motor phase (201a, 201b, 201c). Thus, the forces actuating on the rotor (100) are balanced, ensuring the mechanical stability of the rotor (100).

As already introduced, conventional sensors used to measure the relative position of the rotor (100) in relation to the stator (200), such as resolvers or encoders, involve the use of mechanical parts (static and rotating modules) respectively attached to the stator (200) and to the rotor (100).

Figure 4 schematically depicts a permanent magnet brushless "outrunner" motor, where a sensor static module (300) is shown attached to the motor stator (200).

Contrary to the conventional sensors for measuring the rotor (100) position, the present invention is directed to a position sensor configured to be placed adjacent to (or embedded within) the stator (200) lamination stack.

The position sensor of the present invention comprises a salient pole sensor stator portion (400) (adjacent to the salient pole motor stator portion (205)) formed of a plurality of stacked sensor lamination plates (404), where a single-phase (or polyphase) sensor winding (401) is wound in a distributed manner around sensor salient poles (402) of the salient pole sensor stator portion (400).

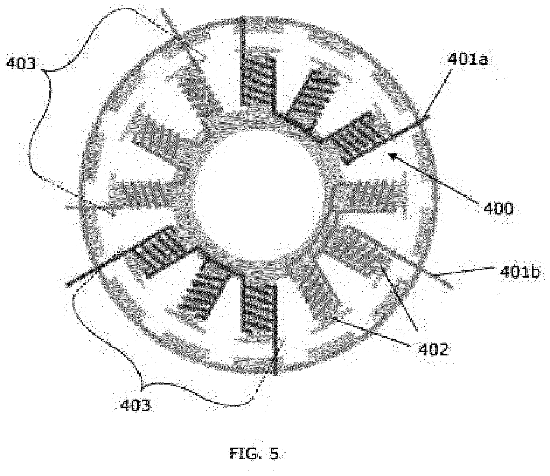

Figure 5 depicts a possible embodiment of the position sensor of the invention, where a two-phase sensor winding (401) of the position sensor is wound around the salient pole sensor stator portion (400) of the sensor, wherein each sensor phase (401a, 401b) is distributed in two sensor peripheral portions (403), separated 180º from each other, wherein each sensor peripheral portion (403) comprises three adjacent sensor salient poles (402).

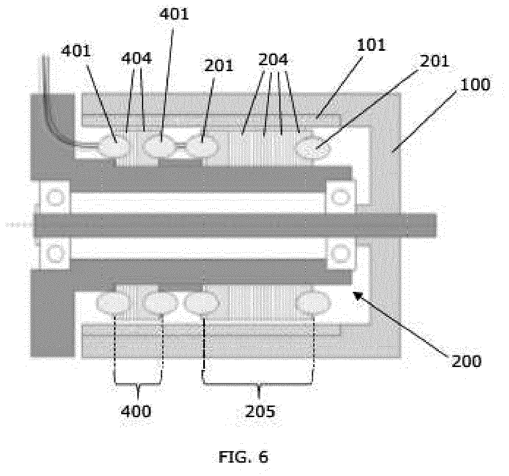

Figure 6 shows a longitudinal cross section of a salient pole brushless "outrunner" motor, which incorporates the position sensor of the present invention.

Figure 6 depicts the salient pole sensor stator portion (400) of the sensor and the salient pole motor stator portion (205) of the motor, wherein the salient pole sensor stator portion (400) of the sensor is separated from the salient pole motor stator portion (205) of the motor by means of a washer (500).

The washer (500) acts as a physical barrier that reduces the influence on the sensor winding (401) of the PWM frequency component present in the motor winding (201) (due to motor commutation).

Instead of the washer (500) (or in addition to the washer), another way of reducing the influence of the PWM frequency component on the sensor winding (401) is to incorporate a band-rejection filter (not shown in the Figures) set at PWM frequency, connected to the sensor winding (401).

## Claims

1. Position sensor for a permanent magnet brushless motor, the motor comprising a rotor (100) with permanent magnets (101) surrounding a stator (200) with stator salient poles (202) and with a motor winding (201) wound around the stator salient poles (202), wherein the position sensor is **characterised in that** it comprises:
- a salient pole sensor stator portion (400) configured to be placed adjacent to a salient pole motor stator portion (205) of the motor, and;
- a sensor winding (401) wound in a distributed manner around sensor salient poles (402) of the salient pole sensor stator portion (400);
wherein the position sensor is configured to measure the position of the rotor (100) in relation to the stator (200) by measuring currents induced in the sensor winding (401) caused by the rotation of the rotor (100).

2. Position sensor according to claim 1, **characterised in that** the salient pole sensor stator portion (400) is formed of a plurality of stacked sensor lamination plates (404).

3. Position sensor according to claim 2, wherein the salient pole motor stator portion (205) is formed of a plurality of stator lamination plates (204), **characterised in that** the sensor lamination plates (404) comprise the same geometry as the stator lamination plates (204).

4. Position sensor according to any preceding claim, **characterised in that** the salient pole sensor stator portion (400) of the sensor is shorter than the salient pole motor stator portion (205) of the motor.

5. Position sensor according to any preceding claim, **characterised in that** the sensor winding (401) is a two-phase sensor winding (401).

6. Position sensor according to claim 5, **characterised in that** each sensor phase (401a, 401b) is distributed in two sensor peripheral portions (403), separated 180º from each other.

7. Position sensor according to claim 6, **characterised in that** each sensor peripheral portion (403) comprises three adjacent sensor salient poles (402).

8. Position sensor according to any preceding claim, **characterised in that** the salient pole sensor stator portion (400) is separated from the salient pole motor stator portion (205) by means of a washer (500).

9. Position sensor according to any preceding claim, **characterised in that** it comprises a band-rejection filter connected to the sensor winding (401).

10. Position sensor according to claim 9, **characterised in that** the band-rejection filter is set at motor commutation PWM frequency.

11. Permanent magnet brushless motor comprising a rotor (100) with permanent magnets (101) surrounding a stator (200) with stator salient poles (202) and with a motor winding (201) wound around the stator salient poles (202), wherein the motor is **characterised in that** it comprises a position sensor according to any preceding claim.
